# EUROPEAN PATENT APPLICATION

(11) **EP 4 238 977 A1**
(43) Date of publication of application: **06.09.2023**
(21) Application number: 21886329.8
(22) Date of filing: 28.10.2021
(51) Int. Cl.: C07F 7/18, H01M 4/13, H01M 4/134, H01M 4/36, H01M 4/38, H01M 4/48, H01M 10/052, H01M 10/0567

(54) **ALKOXYSILYL COMPOUND AND NONAQUEOUS ELECTROLYTIC SOLUTION ADDITIVE CONTAINING SAME, AND NONAQUEOUS ELECTROLYTIC SOLUTION AND NONAQUEOUS ELECTROLYTIC SOLUTION SECONDARY BATTERY CONTAINING SAID ADDITIVE**

(30) Priority: 30.10.2020 JP 2020183192
(71) Applicant: Panasonic Intellectual Property Management Co., Ltd., Osaka 571-0057 (JP)
(72) Inventor: SHIBATA, Sho, Kadoma-shi, Osaka 571-0057 (JP); SUZUKI, Hirotetsu, Kadoma-shi, Osaka 571 - 0057 (JP); SAKATA, Motohiro, Kadoma-shi, Osaka 571 - 0057 (JP)
(74) Representative: Novagraaf International SA
(86) International application number: PCT/JP2021/039846
(87) International publication number: WO 2022/092212

(57) **Abstract**

An alkoxysilyl compound includes two or more silyl groups bonded with a chain including an ether group, wherein the two or more silyl groups each has at least one selected from the group consisting of an alkoxy group and an oxy alkyl group. The alkoxysilyl compound is added to a non-aqueous electrolyte as an additive for a non-aqueous electrolyte.

## Description

### TECHNICAL FIELD

The present disclosure relates to an alkoxysilyl compound, an additive for a non-aqueous electrolyte including the alkoxysilyl compound, a non-aqueous electrolyte including the additive, and a non-aqueous electrolyte secondary battery.

### BACKGROUND ART

A material including a silicon element is promising as a high capacity negative electrode material for secondary batteries. However, a material including a silicon element goes through significant expansion and contraction along with charge/discharge, and therefore tends to cause side reactions, and the capacity retention rate in charge/discharge cycles easily decreases.

Non-Patent Literature 1 reports that the capacity retention rate in the charge/discharge cycle improves by adding a silane coupling agent containing a vinyl group to an electrolyte of a single electrode battery using a Si/C composite.

### Citation List

### Non-Patent Literature

Non-Patent Literature 1: Ionics, 2018, 24, 3691-3698

### SUMMARY OF THE INVENTION

### PROBLEM TO BE SOLVED BY THE INVENTION

However, it is difficult to stably improve capacity retention rate in the charge/discharge cycle with the proposal of Non-Patent Literature 1.

### MEANS FOR SOLVING THE PROBLEM

An aspect of the present disclosure relates to an alkoxysilyl compound including two or more silyl groups bonded with a chain including an ether group, and the two or more silyl groups each has at least one selected from the group consisting of an alkoxy group and an oxy alkyl group.

Another aspect of the present disclosure relates to an additive for a non-aqueous electrolyte including the above-described alkoxysilyl compound.

Still another aspect of the present disclosure relates to a non-aqueous electrolyte including a non-aqueous solvent, a salt that dissolves in the non-aqueous solvent, and the above-described additive for a non-aqueous electrolyte.

Still another aspect of the present disclosure relates to a non-aqueous electrolyte secondary battery including a negative electrode having a negative electrode mixture layer, a positive electrode, the above-described non-aqueous electrolyte, wherein the negative electrode mixture layer includes a negative electrode active material, and the negative electrode active material includes a material including a silicon element.

### Effects of the Invention

Present disclosure stably improves the capacity retention rate in charge/discharge cycles of non-aqueous electrolyte secondary batteries when the negative electrode active material includes a material including a silicon element.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE DRAWINGS

[FIG. 1] FIG. 1 is a partially cutaway plan view illustrating a schematic structure of a non-aqueous electrolyte secondary battery of an embodiment of the present disclosure.
[FIG. 2] FIG. 2 is a cross sectional view along line X-X' of the non-aqueous secondary battery as shown in FIG. 1.
[FIG. 3] FIG. 3 is a diagram illustrating a production method of a negative electrode for performance evaluation.
[FIG. 4] FIG. 4 is a graph illustrating relation between charge/discharge cycle number and capacity retention rate of a non-aqueous electrolyte secondary battery.
[FIG. 5] FIG. 5 is a graph illustrating relation between charge/discharge cycle number and capacity retention rate of a non-aqueous electrolyte secondary battery. Description of the embodiments

### (Alkoxysilyl compound and additive for a non-aqueous electrolyte)

The alkoxysilyl compound of the embodiment of the present disclosure has two or more silyl groups bonded with a chain including an ether group, and the two or more silyl groups each has at least one selected from the group consisting of an alkoxy group and an oxy alkyl group. The alkoxysilyl compound can be used for an additive for a non-aqueous electrolyte. The additive for a non-aqueous electrolyte includes an alkoxysilyl compound. The additive for a non-aqueous electrolyte can be used particularly for a non-aqueous electrolyte secondary battery using a negative electrode active material including a silicon element. The alkoxysilyl compound may be a bis-alkoxysilyl compound having two silyl groups.

It is assumed that in the above-described configuration, the alkoxy group or oxy alkyl group included in each of the silyl groups forms a X-O-Si bond with a surface of the material including a silicon element. Here, X represents the surface of the material including a silicon element, and O bonded with X represents, for example, O atom (or OH group residue) that has been present at the surface of the material including a silicon element. With each of the alkoxy group or oxy alkyl group forming a bond with the surface of the material including a silicon element, the surface of the material including a silicon element is covered with a bis-silyl ether structure having a stable siloxane bond at both ends.

That is, the surface of the material including a silicon element is covered with a coating including a silyl ether structure (hereinafter, also referred to as SE coating). The SE coating has a high elasticity, is stable against reversible elastic deformation, and is unlikely to be damaged even when charge/discharge cycle is repeated. As a result, side reactions in the negative electrode are suppressed, and the capacity retention rate in the charge/discharge cycle stably improves. Furthermore, the oxygen (-O-) included in the silyl ether structure works to accelerate movement of cation (e.g., lithium ion) into and out from the material including a silicon element. As a result, cation conductivity is increased, and the capacity retention rate improves even more.

The alkoxysilyl compound may be bis(alkoxysilyl alkyl) ether represented by a general formula (1):

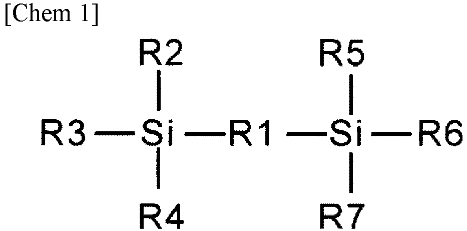

Here, R1 is a chain including an ether group. At least one of R2 to R4 is at least one selected from the group consisting of an alkoxy group with a number of carbon atoms of 1 to 6 and an oxy alkyl group represented by -O-(Cₓ₁H₂ₓ₁₊₁O_{y1}), x1 is an integer of 1 to 6, y1 is an integer of 1 or more. At least one of R5 to R7 is at least one selected from the group consisting of an alkoxy group with a number of carbon atoms of 1 to 6 and an oxy alkyl group represented by -O-(Cₓ₂H₂ₓ₂₊₁O_{y2}), x2 is an integer of 1 to 6, and y2 is an integer of 1 or more. The remainder of R2 to R7 is each independently an alkyl group or oxy alkyl group represented by Cₓ₃H₂ₓ₃₊₁O_{y3}, x3 is an integer of 1 or more, and y3 is an integer of 0 or more. However, the oxy alkyl group is a group other than the alkoxy group.

The alkoxy group or oxy alkyl group included in R2 to R4 and R5 to R7 each forms a X-O-Si-R1 bond with a surface of the material including a silicon element, and the surface of the material including a silicon element is covered with a Si-R1-Si structure having a stable siloxane bond at both ends. That is, the surface of the material including a silicon element is covered with an SE coating including a Si-R1- Si structure.

In the formula (1), R1 may have a structure represented by R11-(O-R12)ₙ-O-R13. Here, R11, R12, and R13 are each independently an alkylene group having a number of carbon atoms of 1 or more, and n is an integer of 0 or more. Such R1 is excellent in flexibility, and the oxygen bonding R11 and R12 and the oxygen bonding R12 and R13 can be coordinated in cation, which may facilitate movement of cations into and out from the material including a silicon element. In this manner, the cation conductivity increases, and the effects of suppressing reduction in the capacity retention rate increase. When n is 2 or more, a plurality of R12 included in the (O-R12) units may be all the same alkylene group, or may be different alkylene groups with different number of carbon atoms.

With a greater number of carbon atoms in R11 and R13, better flexibility can be achieved, which facilitates reversible deformation of the SE coating. However, when the number of carbon atoms of R11 and R13 is excessively large, the alkylene chain becomes excessively long, and the denseness of the coating is reduced, and the effects of suppressing side reactions are reduced. Thus, the number of carbon atoms of R11 and R13 is preferably 1 to 6, and the number of carbon atoms of 2 to 4 is more preferable. Bis(alkoxysilyl alkyl) ether is preferably bis(alkoxysilyl C₁₋₆alkyl) ether, and it may be bis(alkoxysilyl C₂₋₄alkyl) ether.

The -O- group forming R1 increases cation conductivity, and contributes to improvement in the capacity retention rate. However, when the number of the -O- group is excessively high, the denseness of the SE coating is reduced, and therefore the number of the -O-group is preferably 1 to 5, and more preferably 1 to 3. That is, the number n of the (O-R12) units included in the above-described R1 is preferably 0 to 4, and more preferably 0 to 2.

Meanwhile, the number of carbon atoms of R12 is preferably 4 or less, and more preferably 2 or more and 4 or less, in view of facilitating movement of cations between oxygen atoms next to each other.

At least one of R2 to R4 may be at least one selected from the group consisting of an alkoxy group with a number of carbon atoms of 1 to 6 and an oxy alkyl group represented by -O-(Cₓ₁H₂ₓ₁₊₁O_{y1}), x1 is an integer of 1 to 6, y1 is 1 or 2. At least one of R5 to R7 may be at least one selected from the group consisting of an alkoxy group with a number of carbon atoms of 1 to 6 and an oxy alkyl group represented by -O-(Cx2H₂ₓ₂₊₁Oy2), x2 is an integer of 1 to 6, y2 is 1 or 2. The alkoxy group or oxy alkyl group may be small in view of increasing reactivity with the surface of the material including a silicon element, and the number of carbon atoms of the alkoxy group or oxy alkyl group is, for example, 1 to 3.

The reminder of R2 to R7 may be each independently an alkyl group or oxy alkyl group represented by Cₓ₃H₂ₓ₃₊₁O_{y3}, x3 is an integer of 1 to 6, y3 is an integer of 0 or more and 2 or less. In view of reducing steric hindrance at the time of reaction, the number of carbon atoms of the group represented by Cₓ₃H₂ₓ₃₊₁O_{y3} may be 1 to 6, or the number of carbon atoms may be 1 to 3. R2 to R4 are each independent from each other, and the number of carbon atoms of all of R2 to R4 may be the same or may be different, and the number of carbon atoms of two of R2 to R4 may be the same. Similarly, R5 to R7 are each independent from each other, and the number of carbon atoms of all of R5 to R7 may be the same or different, and the number of carbon atoms of two of R5 to R7 may be the same.

The two alkoxysilyl groups (R2R3R4Si-, or R5R6R7Si-) bonded to R1 may be the same or different. However, to form a more symmetrical SE coating structure for a more stable structure, the two alkoxysilyl groups coupled with R1 may be the same structure.

R1 may be -C₃H₆-O-C₃H₆- or -C₂H₄-O-C₂H₄-O-C₃H₆-. R2 to R7 may each be a methoxy group.

For a preferable alkoxysilyl compound, specifically, for example, bis(alkoxysilyl alkyl) ether shown in the chemical formula below is used.

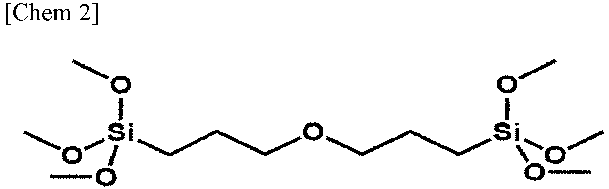

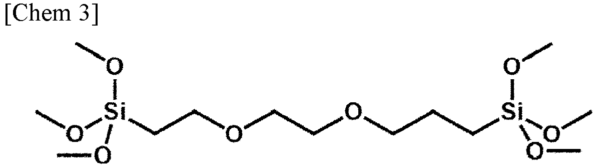

### (Non-aqueous electrolyte)

The non-aqueous electrolyte includes a non-aqueous solvent, a salt (solute) dissolves in the non-aqueous solvent, and the above-described additive for a non-aqueous electrolyte. The salt (solute) is an electrolyte salt whose ions dissociate in the non-aqueous solvent. When the non-aqueous electrolyte is used for a lithium ion secondary battery, the salt includes at least a lithium salt. The component of the non-aqueous electrolyte other than the non-aqueous solvent and the salt is an additive, and at least a part of the additive is the above-described alkoxysilyl compound.

The concentration of the alkoxysilyl compound in the non-aqueous electrolyte may be, for example, 10 mass% or less, 5 mass% or less, 2 mass% or less, or 1 mass% or less. The concentration in this range is sufficient for forming a good and suitable SE coating, regardless of the amount of the material containing a silicon element contained in the negative electrode active material. With a concentration of the alkoxysilyl compound in the non-aqueous electrolyte of, for example, 0.05 mass% or more, it is considered that a considerable SE coating is formed, and a significant effect of improving capacity retention rate in the charge/discharge cycle of a non-aqueous electrolyte secondary battery can be obtained.

However, since the alkoxysilyl compound reacts in the non-aqueous electrolyte secondary battery, the concentration in the non-aqueous electrolyte decreases. Therefore, it is sufficient that the alkoxysilyl compound of the detection-limit or more remains in the non-aqueous electrolyte taken out from disassembled batteries of those completed non-aqueous electrolyte secondary batteries or non-aqueous electrolyte secondary batteries distributed on the market.

For the non-aqueous solvent, for example, cyclic carbonic acid esters, chain carbonic acid esters, cyclic carboxylic acid esters, chain carboxylic acid esters, etc. are used. Examples of the cyclic carbonic acid esters include propylene carbonate (PC), ethylene carbonate (EC), vinylene carbonate (VC). Examples of the chain carbonic acid esters include diethyl carbonate (DEC), ethyl methyl carbonate (EMC), dimethyl carbonate (DMC). Examples of the cyclic carboxylic acid esters include γ-butyrolactone (GBL) and γ-valerolactone (GVL). Examples of the chain carboxylic acid esters include methyl acetate, ethyl acetate, propyl acetate, methyl propionate (MP), and ethyl propionate (EP). A kind of non-aqueous solvent may be used singly, or two or more kinds thereof may be used in combination.

Of these examples, chain carboxylic acid esters are suitable for preparation of a low viscosity non-aqueous electrolyte. Thus, the non-aqueous electrolyte may include 1 mass% or more and 90 mass% or less of the chain carboxylic acid ester. Among the chain carboxylic acid esters, methyl acetate has a particularly low viscosity. Therefore, 90 mass% or more of the chain carboxylic acid ester may be methyl acetate.

Examples of the non-aqueous solvent also include cyclic ethers, chain ethers, nitriles such as acetonitrile, and amides such as dimethylformamide.

Examples of the cyclic ether include 1,3-dioxolane, 4-methyl-1,3-dioxolane, tetrahydrofuran, 2-methyl tetrahydrofuran, propylene oxide, 1,2-butylene oxide, 1,3-dioxane, 1,4-dioxane, 1,3,5-trioxane, furan, 2-methyl-furan, 1,8-cineol, and crown ether.

Examples of the chain ether include 1,2-dimethoxyethane, dimethyl ether, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxy benzene, 1,2-diethoxyethane, 1,2-dibutoxy ethane, diethylene glycol dimethylether, diethylene glycol diethyl ether, diethylene glycol dibutyl ether, 1,1-dimethoxy methane, 1,1-diethoxy ethane, triethylene glycol dimethylether, tetraethylene glycol dimethyl ether, and the like.

These solvents may be a fluorinated solvent in which hydrogen atoms are partially substituted with fluorine atoms. Fluoro ethylene carbonate (FEC) may be used as the fluorinated solvent.

Examples of the lithium salt include, a lithium salt of chlorine containing acid (LiClO₄, LiAlCl₄, LiB₁₀Cl₁₀, etc.), a lithium salt of fluorine containing acid (LiPF₆, LiPF₂O₂, LiBF₄, LiSbF₆, LiAsF₆, LiCF₃SO₃, LiCF₃CO₂, etc.), a lithium salt of fluorine containing acid imide (LiN(FSO₂)₂, LiN(CF₃SO₂)₂, LiN(CF₃SO₂)(C₄F₉SO₂), LiN (C₂F₅SO₂)₂, etc.), a lithium halide (LiCl, LiBr, LiI, etc.) and the like. A kind of lithium salt may be used singly, or two or more kinds thereof may be used in combination.

The concentration of the lithium salt in the non-aqueous electrolyte may be 0.5 mol/liter or more and 2 mol/liter or less, or may be 1 mol/liter or more and 1.5 mol/liter or less. By controlling the concentration of lithium salt to be in the above-described range, a non-aqueous electrolyte having excellent ion conductivity and low viscosity can be obtained.

Examples of the additive other than the alkoxysilyl compound include 1,3-propanesultone, methylbenzenesulfonate, cyclohexylbenzene, biphenyl, diphenyl ether, and fluorobenzene.

### (Non-aqueous electrolyte secondary battery)

A non-aqueous electrolyte secondary battery according to the present disclosure includes a negative electrode, a positive electrode, and the non-aqueous electrolyte described above.

### (Negative electrode)

The negative electrode includes, for example, a negative electrode current collector, and a negative electrode mixture layer formed on the surface of the negative electrode current collector. The negative electrode mixture layer contains a negative electrode active material as an essential component, and may contain a binder, a conductive material, a thickener, and the like as an optional component. Known materials can be used for the optional component such as the binder, the conductive material, and the thickener.

The negative electrode mixture layer can be formed, for example, by applying a negative electrode slurry, in which a negative electrode mixture containing a negative electrode active material and a predetermined optional component are dispersed in a dispersion medium, on a surface of the negative electrode current collector and drying. The dried coating film may be rolled, if necessary. The negative electrode mixture layer may be formed on one surface of the negative electrode current collector, or on both surfaces thereof.

The negative electrode active material includes a material containing a silicon element. The material containing a silicon element may be treated as a type of alloy based materials. Here, the alloy based material refers to a material containing an element capable of forming an alloy with lithium. Silicon and tin are examples of the element capable of forming an alloy with lithium, and silicon (Si) is particularly promising.

As the material containing silicon, a silicon alloy, a silicon compound, or the like may be used, and a composite material may also be used. Among them, a composite material containing a lithium ion conductive phase and a silicon particle phase dispersed in the lithium ion conductive phase is promising. As the lithium ion conductive phase, for example, a silicon oxide phase, silicate phase, carbon phase, or the like can be used. The silicon oxide phase has a relatively large irreversible capacity. On the other hand, the silicate phase is preferable in that its irreversible capacity is small.

The main component (e.g., 95 to 100 mass%) of the silicon oxide phase may be silicon dioxide. The composition of the composite material including the silicon oxide phase and silicon particles dispersed therein, as a whole, can be expressed as SiOₓ. SiOₓ has a structure in which fine particles of silicon are dispersed in SiO₂ in an amorphous form. The content ratio x of oxygen to silicon is, for example, 0.5 ≤ x < 2.0, more preferably 0.8 ≤ x ≤ 1.5.

The silicate phase may include, for example, at least one selected from the group consisting of Group 1 elements and Group 2 elements of the long-form periodic table. Examples of Group 1 elements and Group 2 elements of the long-form periodic table include lithium (Li), potassium (K), sodium (Na), magnesium (Mg), calcium (Ca), strontium (Sr), barium (Ba), and the like. Other elements that can be included are aluminum (Al), boron (B), lanthanum (La), phosphorus (P), zirconium (Zr), titanium (Ti), and the like. In particular, the silicate phase containing lithium (hereinafter also referred to as lithium silicate phase) is preferable because of its small irreversible capacity and high initial charge/discharge efficiency.

The lithium silicate phase may be any oxide phase containing lithium (Li), silicon (Si), and oxygen (O), and may include other element. The atomic ratio O/Si of O to Si in the lithium silicate phase is, for example, larger than 2 and less than 4. Preferably, O/Si is larger than 2 and less than 3. The atomic ratio Li/Si of Li to Si in the silicate phase is, for example, larger than 0 and less than 4. The lithium silicate phase may have a composition represented by the formula: Li_{2z}SiO_{2+z} (0 < z< 2). Preferably, the relation 0 < z < 1 is satisfied, and z=1/2 is more preferable. Examples of the elements other than Li, Si, and O that can be contained in the lithium silicate phase include iron (Fe), chromium (Cr), nickel (Ni), manganese (Mn), copper (Cu), molybdenum (Mo), zinc (Zn), aluminum (Al), etc.

The carbon phase may be composed of, for example, an amorphous carbon with less crystallinity. The amorphous carbon may be, for example, hard carbon, soft carbon, or something else.

In addition to the material containing a silicon element, the negative electrode active material may include a material that electrochemically stores and releases lithium ions, lithium metal, lithium alloy, and the like. As the material that electrochemically stores and releases lithium ions, a carbon material is preferable. Examples of the carbon material include graphite, graphitizable carbon (soft carbon), non-graphitizable carbon (hard carbon), and the like. Particularly, graphite with excellent charge/discharge stability and low irreversible capacity is preferable..

For the negative electrode current collector, for example, a metal sheet or metal foil is used. For the material of the negative electrode current collector, stainless steel, nickel, nickel alloy, copper, copper alloy or the like can be exemplified.

### (Positive electrode)

The positive electrode includes, for example, a positive electrode current collector, and a positive electrode mixture layer formed on the surface of the positive electrode current collector. The positive electrode mixture layer contains a positive electrode active material as an essential component, and may contain a binder, a conductive material, a thickener, and the like as an optional component. Known materials can be used for the optional component such as the binder, the conductive material, and the thickener.

The positive electrode mixture layer can be formed, for example, by applying a positive electrode slurry, in which a positive electrode mixture containing a positive electrode active material and a predetermined optional component are dispersed in a dispersion medium on a surface of the positive electrode current collector and drying. The dried coating film may be rolled, if necessary. The positive electrode mixture layer may be formed on one surface of the positive electrode current collector, or may be formed on both surfaces thereof.

The positive electrode active material includes a lithium-containing composite oxide. The lithium-containing composite oxide is not particularly limited, but one having a layered rock salt type crystal structure containing lithium and a transition metal is promising. Specifically, the lithium-containing composite oxide may be, for example, LiₐNi_{1-x-y}CoₓM_{y}O₂ (where 0 < a ≤ 1.2, 0 ≤ x ≤ 0.1, 0 ≤ y ≤ 0.1, 0 < x + y ≤ 0.1, and M is at least one selected from the group consisting of Na, Mg, Sc, Y, Mn, Fe, Cu, Zn, Al, Cr, Pb, Sb, and B). From the viewpoint of stabilities of the crystal structure, Al may be contained as M. Note that the value "a" indicating the molar ratio of lithium is increased or decreased by charging and discharging. Specifically, LiNi_{0.9}Co_{0.05}Al_{0.05}O₂ and LiNi_{0.91}Co_{0.06}Al_{0.03}O₂ are exemplified.

The positive electrode active material (particularly lithium-containing composite oxide) usually is in the form of secondary particles of coagulated primary particles. The average particle size of the positive electrode active material may be, for example, 2 µm or more and 20 µm or less. Here, the average particle size refers to a median diameter in which the cumulative volume in volume-based particle size distribution is 50%. The volume-based particle size distribution can be measured by a laser diffraction particle size distribution analyzer.

For the positive electrode current collector, for example, a metal sheet or metal foil is used. Examples of the material of the positive electrode current collector may be stainless steel, aluminum, aluminum alloy, and titanium.

Examples of the conductive material used for the positive electrode mixture layer and negative electrode mixture layer include carbon materials such as carbon black (CB), acetylene black (AB), Ketjen Black (KB), carbon nanotube (CNT), and graphite. A kind of the conductive material may be used singly, or two or more kinds may be used in combination.

Examples of the binder for the positive electrode mixture layer and negative electrode mixture layer include fluororesin (polytetrafluoroethylene, polyvinylidene fluoride, etc.), polyacrylonitrile (PAN), polyimide resin, acrylic resin, polyolefin resin, and the like. A kind of the binder may be used singly, or two or more kinds may be used in combination.

### (Separator)

A separator is interposed between the positive electrode and the negative electrode. The separator has excellent ion permeability and suitable mechanical strength and electrically insulating properties. The separator may be, for example, a microporous thin film, a woven fabric, or a nonwoven fabric. The separator is preferably made of, for example, polyolefin, such as polypropylene and polyethylene.

In an example structure of a secondary battery, an electrode group and a non-aqueous electrolyte are accommodated in an outer package, the electrode group having a positive electrode and a negative electrode wound with a separator. Alternatively, instead of the wound-type electrode group, other forms of electrode groups may be applied, such as a laminated electrode group in which the positive electrode and the negative electrode are laminated with a separator interposed therebetween. The non-aqueous electrolyte secondary battery may be in any form, e.g., cylindrical, prismatic, coin-shaped, button shaped, sheet (laminate) shaped, etc.

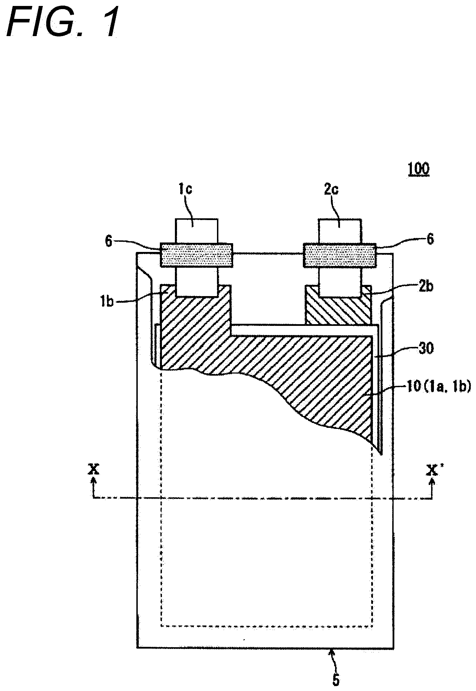

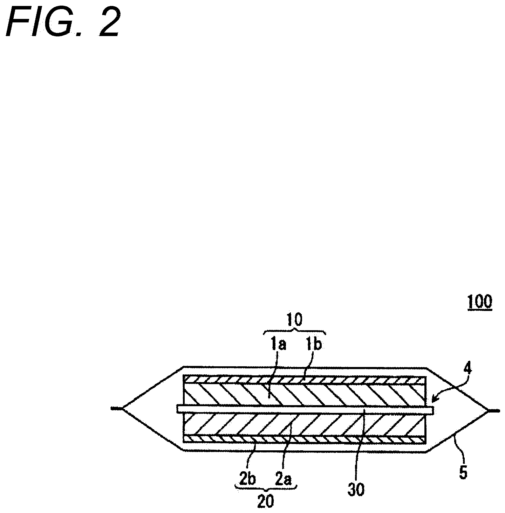

Referring to FIG. 1 and FIG. 2, a non-aqueous electrolyte secondary battery according to an embodiment of the present disclosure will be described below. FIG. 1 is a partially cutaway plan view schematically showing an exemplary non-aqueous electrolyte secondary battery structure. FIG. 2 is a cross sectional view along line X-X' in FIG. 1.

As shown in FIG. 1 and FIG. 2, a non-aqueous electrolyte secondary battery 100 is a sheet type battery, and includes an electrode group 4 and an outer case 5 for accommodating the electrode group 4.

The electrode group 4 has a structure in which a positive electrode 10, a separator 30, and a negative electrode 20 are stacked in this order, and the positive electrode 10 and the negative electrode 20 face each other with the separator 30 interposed therebetween. The electrode group 4 is formed in this manner. The electrode group 4 is impregnated with a non-aqueous electrolyte (not shown).

The positive electrode 10 includes a positive electrode mixture layer 1a and a positive electrode current collector 1b. The positive electrode mixture layer 1a is formed on the surface of the positive electrode current collector 1b.

The negative electrode 20 includes a negative electrode mixture layer 2a and a negative electrode current collector 2b. The negative electrode mixture layer 2a is formed on the surface of the negative electrode current collector 2b.

A positive electrode tab lead 1c is connected to the positive electrode current collector 1b, and a negative electrode tab lead 2c is connected to the negative electrode current collector 2b. The positive electrode tab lead 1c and negative electrode tab lead 2c each extends out of the outer case 5.

An insulating tab film 6 insulates the positive electrode tab lead 1c from the outer case 5, and the negative electrode tab lead 2c from the outer case 5.

Hereinafter, the present disclosure will be specifically described based on Examples and Comparative Examples, but the present disclosure is not limited to the following Examples.

### « Example 1 »

### (1) Synthesis of alkoxysilyl compound

To a dry 100 mL 4-neck vessel, 1.0 g of allyl ether, 40.0 mL of dichloro ethane (C₂H₄Cl₂), 3.7 g of trimethoxysilane (HSi(OMe)₃), and 0.1 g of cyclo octadiene iridium chloride dimer ([Ir(COD)Cl]₂) was added and stirred, to allow the reaction shown in the formula below to progress. The mixture was stirred while heated from room temperature to 50°C until the raw material allyl ether disappeared. After confirming that the raw material disappeared, the heating and stirring was stopped, the solvent dichloro ethane was distilled off with an evaporator, thereby producing a crude material of brown oil X1 (4.0 g) including an alkoxysilyl compound A.

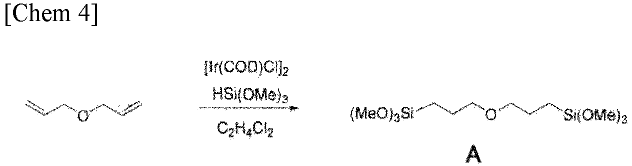

Then, to a dry 500 mL round bottom vessel, 5.0 g of allyl ether, 200 mL of dichloro ethane (C₂H₄Cl₂), 18.6 g of trimethoxysilane (HSi(OMe)₃), and 0.68 g of cyclo octadiene iridium chloride dimer ([Ir(COD)Cl]₂) were added, and stirred while heating from room temperature to 50°C. After confirming that the raw material disappeared, the heating and stirring were stopped, and the solvent dichloro ethane was distilled off with a vacuum pump. The brown oil X1 was added to the crude material after the distilling, and using a distillation purifier to which a flask, T-tube, thermometer, condenser tube, vacuum pump, and pressure gauge were connected, distillation purification was carried out with an oil bath temperature of 190°C, a degree of vacuum of 0.1-0.01 mmHg, thereby producing a brown oil X2 (9.3 g) including the alkoxysilyl compound A.

Furthermore, to a dry 500 mL round bottom vessel, 5.0 g of allyl ether, 200 mL of dichloro ethane (C₂H₄Cl₂), 18.6 g of trimethoxysilane (HSi(OMe)₃), and 0.5 g of cyclo octadiene iridium chloride dimer ([Ir(COD)Cl]₂) was added, and stirred while heating from room temperature to 50°C. After confirming that the raw material disappeared, the heating and stirring were stopped, and the solvent dichloro ethane was distilled off with a vacuum pump. The brown oil X2 was added to the crude material after the distilling, and distillation purification was performed again with an oil bath temperature of 190°C and a degree of vacuum of 0.1-0.01 mmHg, thereby producing a colorless oil compound X3 (13.3 g, 38.8 mol, yield 34.6%) including the alkoxysilyl compound A. Purity was checked with H¹-NMR and gas chromatography (GC).

### (2) Production of negative electrode

A negative electrode slurry was made by mixing SiOₓ (x=1) (Shin-Etsu Chemical Co., KSC1064), carbon black (Denka Company Limited, HS-100), and an aqueous solution of polyacrylamide (binder) so that the mass ratio of SiOₓ : carbon black : polyacrylamide was 75:15:10; further adding water to the mixture; and stirring the mixture. Next, a coating film was formed by applying the negative electrode slurry on one side of a negative electrode current collector (electrolytic copper foil). After the coating film was dried, the coating film was rolled together with the negative electrode current collector by a roller to obtain a negative electrode including a negative electrode mixture layer.

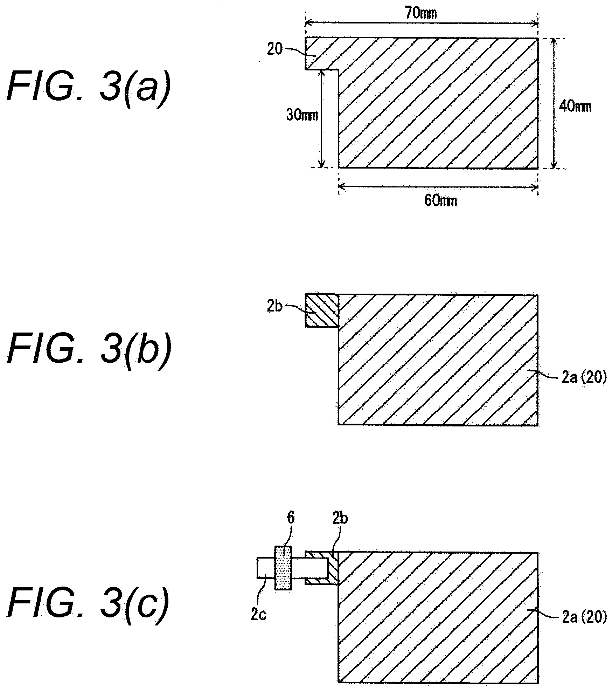

A negative electrode was cut into the form shown in FIG. 3 (a) and a negative electrode 20 for evaluation was obtained. In FIG. 3 (a), the region of 60 mm × 40 mm is a region to function as a negative electrode, and the protrusion region of 10 mm × 10 mm is a region that connects with the tab lead 2c. Thereafter, as shown in FIG. 3 (b), the negative electrode mixture layer 2a formed on the above-described connecting region was scraped to expose the negative electrode current collector 2b. Thereafter, as shown in FIG. 3 (c), the exposed part of the negative electrode current collector 2b was connected to the negative electrode tab lead 2c and a predetermined region of the outer periphery of the negative electrode tab lead 2c was covered with an insulating tab film 6.

### (3) Production of counter electrode

A counter electrode was produced by attaching a lithium metal foil to one surface of an electrolytic copper foil (current collector).

The counter electrode was cut out into the same shape as the negative electrode, and the lithium metal foil formed on the connecting region formed in the same manner as the negative electrode was peeled off to expose the current collector. The exposed part of the current collector was connected to the tab lead in the same manner as the negative electrode, and afterwards, a predetermined region of the outer periphery of the tab lead was covered with an insulating tab film.

### (4) Preparation of non-aqueous electrolyte

A non-aqueous electrolyte was prepared by dissolving LiPF₆ in a solvent mixture of fluoroethylene carbonate (FEC) and dimethyl carbonate (DMC) (volume ratio 20:80) at a concentration of 1 mol/L. To the non-aqueous electrolyte, the alkoxysilyl compound A was added so that the concentration in the non-aqueous electrolyte was 0.1 mass%.

### (5) Production of evaluation cell

Using the negative electrode for evaluation as described above and a counter electrode, a cell with a designed capacity of 114 mAh, which is regulated by the negative electrode, was produced. First, the negative electrode and counter electrode were allowed to face each other with two sheets of a polyethylene made separator (thickness 15 µm) having an aramid coating so that the negative electrode mixture layer overlaps with the lithium metal foil, thereby producing an electrode group. Next, an Al laminate film (thickness 100 µm) cut into a rectangular shape was folded in half, and longitudinal ends were heat-sealed at 230°C to form an envelope. Afterwards, the fabricated electrode group was put into the envelope from one of short sides, and heat-sealing at 230°C was performed, aligning the position of the thermal welding resin of respective tab leads with the end face of the Al laminate film. Next, 1.2 cm³ of the non-aqueous electrolyte was injected from the short side of the envelope not heat-sealed, and after the injection, the operation of allowing it to stand for 3 minutes under a reduced pressure of 0.02 MPa, and to return to an atmospheric pressure environment was carried out twice to impregnate the negative electrode mixture layer with the non-aqueous electrolyte. Finally, the end face of the liquid-injected side of the Al laminate film was heat-sealed at 230°C to obtain a cell A1 for evaluation. The evaluation cell was prepared in a dry air atmosphere having a dew point of - 60°C or less.

### (6) Battery evaluation

The evaluation cell was sandwiched between a pair of 10 × 5 cm stainless steel (thickness 6 mm) plates and fixed under a pressure of 3.2 MPa.

### <First cycle >

In a thermostatic chamber at 25°C, the negative electrode was charged with lithium over 2 hours at a constant current of 0.05 C (1 C is a current value at which designed capacity is discharged by an hour), and the negative electrode was allowed to stand for 12 hours. The negative electrode was then charged further to a cell voltage of 0.01 V with a constant current of 0.05 C, and allowed to stand for 20 minutes. Lithium was then discharged from the negative electrode to a cell voltage of 1.5 V at a constant current of 0.05 C, and the cell was allowed to stand for 20 minutes.

### <2nd to 3rd cycles >

The negative electrode was then charged with lithium to a cell voltage of 0.01 V with a constant current of 0.05 C, and allowed to stand for 20 minutes. Lithium was then discharged from the negative electrode to a cell voltage of 1.5 V at a constant current of 0.05 C, and the cell was allowed to stand for 20 minutes.

<4th to 50th cycles >

The negative electrode was charged with lithium at a constant current of 0.3 C to a cell voltage of 0.01 V, and allowed to stand for 20 minutes, and thereafter, lithium was discharged from the negative electrode to a cell voltage of 1.5 V at a constant current of 0.3 C, and the cell was allowed to stand for 20 minutes: this cycle was repeated.

The ratio of the capacity obtained by the lithium discharge of the 50th cycle to the capacity obtained by the lithium discharge of the 1st cycle was determined as 50th cycle capacity retention rate. Table 1 shows the results.

### « Examples 2 to 4 »

Evaluation cells A2 to A4 were produced and evaluated in the same manner as in Example 1, except that in the non-aqueous electrolyte preparation, the amount of the alkoxysilyl compound A added to the non-aqueous electrolyte was changed as shown in Table 1.

### « Examples 5 to 8 »

In the synthesis of the alkoxysilyl compound, under room temperature, to a 200 mL reactor, ethylene glycol monovinyl ether (5.0 g, 1.0 eq.), super dehydrated dimethylformamide (DMF) 50 mL, and allyl bromide (7.55 g, 1.1 eq.) were added. To this solution, NaH (2.27 g, 1.0 eq.) was added while stirring in portions slowly taking 20 minutes, thereby producing a white suspension liquid. The white suspension liquid was stirred at room temperature for 16 hours, to allow the reaction shown with the formula below to progress. After stirring, water was added to quench the reaction, thereby producing a reaction solution including a compound B.

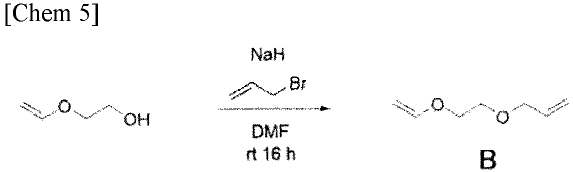

The reaction solution was introduced into a separatory funnel, and after adding 30 mL of diethyl ether, an operation of extracting an organic phase was repeated three times. The extracted organic phase was put together in the separatory funnel again, 100 mL of water was added and stirred, and then the operation of discharging the aqueous phase was repeated three times. After adding 100 mL of a saturated salt solution and stirring, the aqueous phase was discharged. Afterwards, 20 g of anhydrous sodium sulfate was added to the remained organic phase to remove water, and the anhydrous sodium sulfate was removed by filtration. Afterwards, diethyl ether was removed under a normal pressure with a bath temperature of 50°C, and the residue was subjected to distillation purification (degree of vacuum: 20 mmHg, oil bath temperature: 70°C, vapor temperature: 50°C) using a distillation purifier to which a flask, T-tube, thermometer, condenser tube, vacuum pump, and a pressure gauge were connected, thereby producing a colorless liquid Y1 including a compound B.

Then, to a 50 mL reactor, the compound B (1.0 g, 1.0 eq.), super dehydrated dichloro methane 30 mL, and cyclo octadiene iridium chloride dimer ([Ir(COD)Cl]₂) (52 g, 0.01 eq.) were added, thereby producing an orange solution. While stirring the orange solution, trimethoxysilane (HSi(OMe)₃) (3.0 mL, 3.0 eq.) was dropped slowly, taking 15 minutes. The solution was stirred at room temperature for 2 hours to allow the reaction shown in the formula below to progress, thereby producing a solution Y2 including an alkoxysilyl compound C.

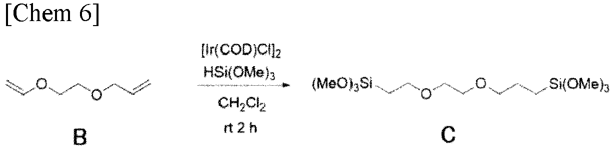

Furthermore, under room temperature, to a 50 mL reactor, the compound B (5.0 g, 1.0 eq.), super dehydrated dichloro methane 125 mL, and cyclo octadiene iridium chloride dimer ([Ir(COD)Cl]₂) 0.26 g were added, thereby producing an orange solution. While stirring the orange solution, trimethoxysilane (HSi(OMe)₃) (14.9 mL, 3.0 eq.) was dropped slowly, taking 15 minutes. The solution was stirred at room temperature for 2 hours, and then the solution Y2 was added to the stirred solution. A distillation purifier was attached to the reactor, and dichloro methane was removed at a bath temperature of 50°C, and further volatile component was removed under a reduced pressure of 20 mmHg/70°C. The residue was subjected to distillation purification (degree of vacuum: 0.1-0.3 mmHg, oil bath temperature: 180-195°C, vapor temperature: 139-142°C), thereby producing a light brown solution of alkoxysilyl compound C (10.4 g, 27.9 mol, yield 59.6%).

In the non-aqueous electrolyte preparation, the alkoxysilyl compound C was added so that the concentration in the non-aqueous electrolyte was mass% as shown in Table 1.

Except for the above, evaluation cells A5 to A8 were produced and evaluated in the same manner as in Example 1.

### « Comparative Examples 1, 2»

In the non-aqueous electrolyte preparation, instead of the alkoxysilyl compound, vinyltris (2-methoxy ethoxy) silane (VTMS) represented by the formula below was added in an amount shown in Table 1 to the non-aqueous electrolyte.

Except for the above, evaluation cells B1 and B2 were produced and evaluated in the same manner as in Example 1. VTMS is the additive used in Non-Patent Literature 1.

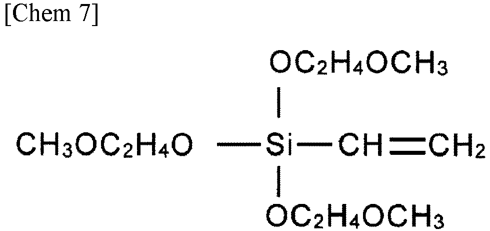

### « Comparative Example 3»

An evaluation cell B3 was produced and evaluated in the same manner as in Example 1, except that in the non-aqueous electrolyte preparation, the alkoxysilyl compound was not added.

**[Table 1]**

| | Silyl compound | Added concentration (mass%) | Capacity retention rate(%) at 50th cycle |
|---|---|---|---|
| A1 | Compound A | 0.1 | 89.9 |
| A2 | Compound A | 0.5 | 92.2 |
| A3 | Compound A | 2.5 | 97.7 |
| A4 | Compound A | 5 | 87.2 |
| A5 | Compound C | 0.1 | 83.9 |
| A6 | Compound C | 0.5 | 91.1 |
| A7 | Compound C | 2.5 | 95.7 |
| A8 | Compound C | 5 | 93.7 |
| B1 | VTMS | 0.5 | 72.7 |
| B2 | VTMS | 4 | 9.0 |
| B3 | - | - | 76.3 |

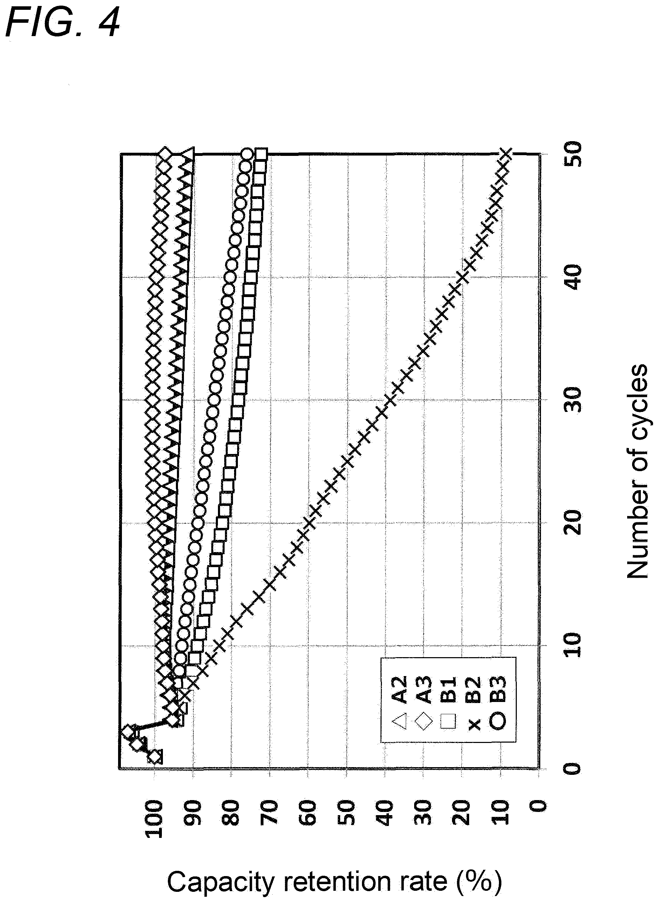

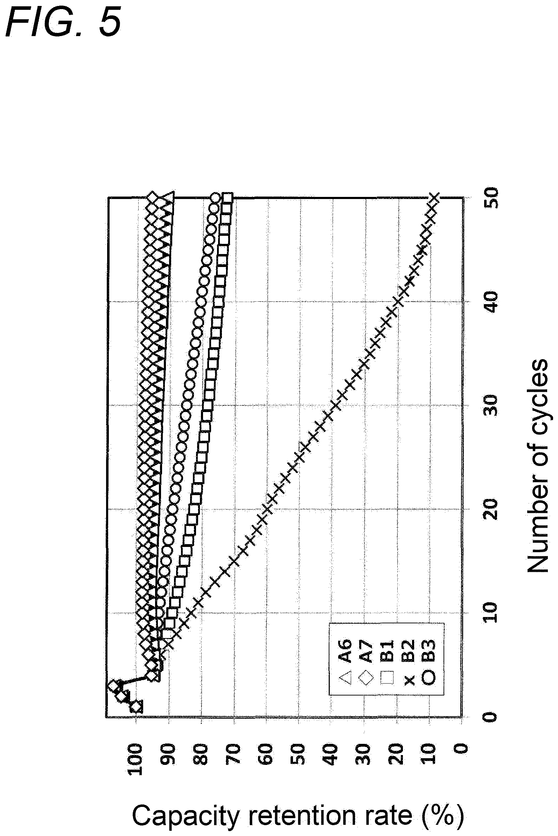

FIG. 4 shows the relation between the charge/discharge cycle numbers and capacity retention rate of the evaluation cells A2, A3, and B 1 to B3. FIG. 5 shows the relation between the charge/discharge cycle numbers and capacity retention rate of the evaluation cells A6, A7, and B1 to B3.

Table 1 and FIG. 4, FIG. 5 show that by adding the bis(alkoxysilyl alkyl) ether, i.e., the alkoxysilyl compounds A or C to the non-aqueous electrolyte, the capacity retention rate improves.

On the other hand, as shown in FIGs. 4 and 5, VTMS used in Non-Patent Literature 1 could not improve the capacity retention rate.

### Industrial Applicability

The additive for a non-aqueous electrolyte according to the present disclosure is suitably used for a non-aqueous electrolyte secondary battery in which a negative electrode active material contains a material containing a silicon element.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention. Description of Reference Numerals

1a: positive electrode mixture layer, 1b: positive electrode current collector, 1c: positive electrode tab lead, 2a: negative electrode mixture layer, 2b: negative electrode current collector, 2c: negative electrode tab lead, 4: electrode group, 5: external case, 6: insulating tab film, 10: positive electrode, 20: negative electrode, 30: separator, 100: non-aqueous electrolyte secondary battery

## Claims

1. An alkoxysilyl compound comprising two or more silyl groups bonded with a chain including an ether group, wherein
the two or more silyl groups each has at least one selected from the group consisting of an alkoxy group and an oxy alkyl group.

2. The alkoxysilyl compound of claim 1, including two silyl groups.

3. The alkoxysilyl compound of claim 2, wherein the alkoxysilyl compound is bis(alkoxysilyl alkyl) ether represented by a general formula (1): 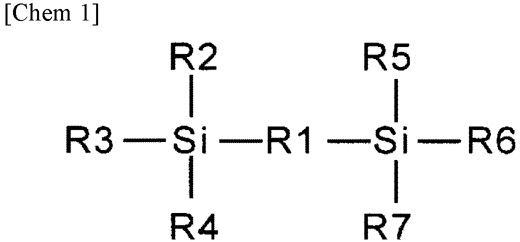 where,
R1 is a chain including an ether group,
at least one of R2 to R4 is at least one selected from the group consisting of an alkoxy group with a number of carbon atoms of 1 to 6 and an oxy alkyl group represented by -O-(Cₓ₁H₂ₓ₁₊₁O_{y1}), x1 is an integer of 1 to 6, and y1 is an integer of 1 or more, and
at least one of R5 to R7 is at least one selected from the group consisting of an alkoxy group with a number of carbon atoms of 1 to 6 and an oxy alkyl group represented by -O-(Cₓ₂H₂ₓ₂₊₁O_{y2}), x2 is an integer of 1 to 6, and y2 is an integer of 1 or more, and
the remainder of R2 to R7 is an alkyl group or oxy alkyl group each independently represented by Cₓ₃H₂ₓ₃₊₁O_{y3}, x3 is an integer of 1 or more, and y3 is an integer of 0 or more.

4. The alkoxysilyl compound of claim 3, wherein R1 is represented by R11-(O-R12)ₙ-OR13, and
R11, R12, and R13 is each independently an alkylene group with a number of carbon atoms of 1 or more, and n is an integer of 0 or more.

5. The alkoxysilyl compound of claim 3 or 4, wherein R1 is -C₃H₆-O-C₃H₆- or -C₂H₄-O-C₂H₄-O-C₃H₆-.

6. The alkoxysilyl compound of any one of claims 3 to 5, wherein R2 to R7 is a methoxy group.

7. An additive for a non-aqueous electrolyte comprising the alkoxysilyl compound of any one of claims 1 to 6.

8. A non-aqueous electrolyte comprising a non-aqueous solvent, a salt that dissolves in the non-aqueous solvent, and the additive for a non-aqueous electrolyte of claim 7.

9. The non-aqueous electrolyte of claim 8, wherein the additive for a non-aqueous electrolyte has a concentration of 10 mass% or less.

10. The non-aqueous electrolyte of claim 8 or 9, wherein the additive for a non-aqueous electrolyte has a concentration of 0.05 mass% or more.

11. A non-aqueous electrolyte secondary battery comprising: a negative electrode having a negative electrode mixture layer, a positive electrode, and the non-aqueous electrolyte of any one of claims 8 to 10, wherein
the negative electrode mixture layer includes a negative electrode active material, and
the negative electrode active material includes a material including a silicon element.

12. The non-aqueous electrolyte secondary battery of claim 11, wherein the material including a silicon element is a composite material, and
the composite material includes a lithium ion conductive phase and a silicon phase dispersed in the lithium ion conductive phase.
